# EUROPÄISCHE PATENTSCHRIFT

(11) **EP 1 186 390 B1**
(45) Veröffentlichungstag und Bekanntmachung des Hinweises auf die Patenterteilung: **17.09.2003**
(21) Anmeldenummer: 01116279.9
(22) Anmeldetag: 05.07.2001
(51) Int. Cl.: B28C 5/42, B01F 15/00, F16H 47/04

(54) **Hydrostatisch mechanisches Getriebe zum Antrieb einer Mischtrommel**
Hydrostatic mechanical gear for driving a mixing drum
Engrenage hydrostatique mécanique pour l'entraînement d'un tambour mélangeur

(30) Priorität: 11.07.2000 DE 10033661
(43) Veröffentlichungstag der Anmeldung: 13.03.2002
(73) Patentinhaber: ZF FRIEDRICHSHAFEN Aktiengesellschaft, 88038 Friedrichshafen (DE)
(72) Erfinder: Gebhard, Wolfgang, 88048 Friedrichshafen (DE)

(56) Entgegenhaltungen:
- EP-A- 0 695 230
- GB-A- 1 349 462
- US-A- 5 820 258

## Beschreibung

Die Erfindung bezieht sich auf ein hydrostatisch mechanisches Getriebe zum Antrieb einer Mischtrommel, nach der im Oberbegriff von Anspruch 1 näher definierten Art. Ein derartiges Getriebe ist aus der US-A-5 820 258 bekannt. Bei diesen Getrieben wird eine Mischtrommel über einen hydrostatischen Motor, welcher mindestens eine Planetenstufe antreibt, angetrieben. Bei Fahrmischern ist das Getriebe zuwischen der Mischtrommel und dem Führerhaus des Fahrzeugs angeordnet. Bewegt sich das Fahrzeug in unebenem Gelände, so tritt zwischen der Mischtrommel und einem vorderen Bereich des Fahrzeugs ein Fehlwinkel auf, welcher häufig über eine Bogenzahnkupplung und ein Pendelrollenlager im Getriebe ausgeglichen wird. Die Mischtrommel wird über einen hinteren Lagerbock und über ein Lager im Getriebe gelagert.

Die EP 695 230 B1 offenbart ein hydrostatisch mechanisches Getriebe zum Antrieb einer Mischtrommel, bei welchem ein langsamlaufender hydrostatischer Motor ein inneres Zentralrad einer Planetenstufe antreibt, deren Hohlrad drehfest gehalten ist und deren Planetenträger den Abtrieb bildet, wobei der Planetenträger über eine Bogenzahnkupplung einen Abtriebsflansch antreibt, welcher die Mischtrommel antreibt. Der Abtriebsflansch ist über ein Pendelrollenlager im Gehäuse des Getriebes gelagert. Durch diese Anordnung benötigt das hydrostatisch mechanische Getriebe eine sehr große axiale Baulänge, wodurch die Mischtrommel weiter entfernt vom Führerhaus des Fahrzeugs angeordnet werden muß.

Der vorliegenden Erfindung liegt die Aufgabe zugrunde, ein hydrostatisch mechanisches Getriebe zum Antrieb einer Mischtrommel zu schaffen, welches eine geringe Baulänge aufweist.

Die Aufgabe wird mit einem, auch die kennzeichnenden Merkmale des Hauptanspruchs aufweisenden, gattungsgemäßen hydrostatisch mechanischen Getriebe zum Antrieb einer Mischtrommel gelöst.

Ein hydrostatischer Motor treibt ein inneres Zentralrad mindestens einer Planetenstufe an, wobei der Abtrieb einer Planetenstufe die Mischtrommel antreibt. Als Abtrieb der Planetenstufe kann entweder das äußere Zentralrad verwendet werden, wobei der Planetenträger drehfest gehalten ist oder der Planetenträger bildet den Abtrieb, wobei das äußere Zentralrad drehfest gehalten ist. Die Planetenstufe, welche die Mischtrommel antreibt, ist im Bereich einer Anflanschfläche, an welche das Getriebe an die Mischtrommel angeflanscht ist, angeordnet. Es besteht auch die Möglichekeit, daß die Planetenstufe des Getriebes in die Mischtrommel hineinragt, da dieser Bereich der Mischtrommel nicht vom Mischgut genutzt wird. Hydrostatische Axialkolbenmotoren werden vorzugsweise mit mehreren Planetenstufen verwendet, hydrostatische Radkolbenmotoren werden vorzugsweise mit nur einer Planetenstufe verwendet. Bei Verwendung eines Radialkolbenmotors, welcher einen Kurvenring und einen Rotationszylinder aufweist, und einer Planetenstufe mit drehfest gehaltenem Planetenträger, wobei das äußere Zentralrad den Abtrieb bildet, kann der Kurvenring des Radialkolbenmotors direkt mit dem Planetenträger verbunden sein. Das innere Zentralrad der Planetenstufe steht mit dem Rotationszylinder des Radialkolbenmotors in Verbindung. Der hydrostatische Motor und die Planetenstufe folgen bei einem Fehlwinkel der Mischtrommel in Folge unebener Fahrbahn den Bewegungen der Mischtrommel, wobei der hydrostatische Motor und die Planetenstufe entweder nur über die Verzahnung in radialer Richtung zentriert sind oder zusätzlich über ein Lager und die Zentrierung der Verzahnung in radialer Richtung gelagert sind. Der Ausgleich des Fehlwinkels der Mischtrommel zum Lagerbock, an welchem das Getriebe mit dem Fahrzeug befestigt ist, kann entweder über ein Pendelrollenlager, in Verbindung mit einem Gleitstein oder einer Bogenzahnkupplung, oder einer sphärischen Lagerung erfolgen. Die Planetenstufe und der hydrostatische Motor weisen einen geringerern Abstand zur Anflanschfläche des Getriebes an die Mischtrommel auf als die Lagerung, durch welche die Mischtrommel ihre radialen und axialen Kräfte über das Getriebe an das Fahrzeug überträgt. Das Getriebe weist an einer Seite der Planetenstufe, welche dem hydrostatischen Motor gegenüberliegt, eine Wandung auf, welche einerseits als Wandung für das Getriebe dient und andererseits als Wandung für das Mischgut der Mischtrommel benutzt werden kann. Ragt die Planetenstufe in die Mischtrommel hinein, so ist vorzugsweise diese Wandung topfförmig ausgebildet. Die Lagerung, mit welcher die Mischtrommel über das Getriebe am Fahrzeug gelagert ist, befindet sich vorzugsweise radial außerhalb der Ölzuführung des hydrostatischen Motors.

Da sich die Planetenstufe im Bereich der Anflanschfläche befindet, kann das hydrostatisch mechanische Getriebe in seiner axialen Erstreckung geringer ausgeführt werden, wodurch die Mischtrommel näher beim Führerhaus des Fahrzeugs angeordnet sein kann und somit länger ausgeführt sein kann. Die Verbindung des Planetenträgers direkt mit dem hydrostatischen Motor verringert die axiale Baulänge des Getriebes zusätzlich.

Weitere Merkmale sind der Figurenbeschreibung zu entnehmen.

Es zeigen:
- Figur 1: einen Schnitt durch ein hydrostatisch mechanisches Getriebe mit einer Pendelrollenlagerung
- Figur 2: einen Schnitt durch ein hydrostatisch mechanisches Getriebe mit einer sphärischen Lagerung
- Figur 3: einen Schnitt durch ein hydrostatisch mechanisches Getriebe mit einer sphärischen Lagerung

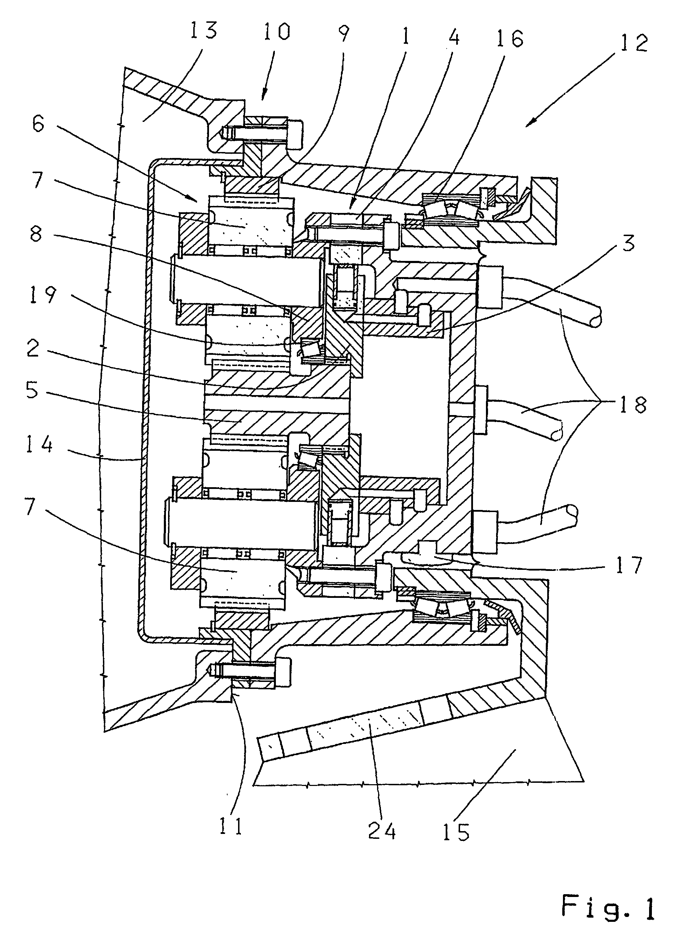

Figur 1: Ein hydrostatischer Motor 1 besteht aus einem Rotationszylinder 2, einem Druckmittelverteiler 3 und einem Kurvenring 4. Der Rotationszylinder 2 ist mit einem inneren Zentralrad 5 und einer Planetenstufe 6 verbunden, deren Planetenräder 7 in einem Planetenträger 8 gelagert sind und deren äußeres Zentralrad 9 den Abtrieb bildet. Die Planetenstufe 6 befindet sich im Bereich 10 der Anflanschfläche 11, an welcher das Getriebe 12 an die Mischtrommel 13 angeflanscht ist. Das Getriebe 12 ist zur Mischtrommel über eine Wandung 14 flüssigkeitsdicht getrennt. Ragt die Planetenstufe 6 über die Anflanschfläche 11 in die Mischtrommel 13 hinein, so ist die Wandung 14 vorzugsweise topfförmig ausgeführt. Bei Fehlwinkeln der Mischtrommel 13, gegenüber dem Sockel 15, welcher mit dem Fahrzeug verbunden ist, folgen der hydrostatische Motor 1 und die Planetenstufe 6 den Bewegungen der Mischtrommel, wobei der Ausgleich der Bewegungen zwischen dem Sockel 15 und der Mischtrommel 13 über ein Lager 16 erfolgt, welches vorzugsweise als Pendelrollenlager ausgeführt ist, und wobei sich das Drehmoment über einen Gleitstein 17 oder eine Bogenzahnkupplung abstützt. Die hydraulischen Anschlüsse 18 sind vorzugsweise als Schlauchleitungen ausgeführt, um den Bewegungen des hydraulischen Motors folgen zu können. Der hydraulische Motor 1 und die Planetenstufe 6 weisen einen geringeren Abstand zur Anflanschfläche 11 als die Lagerung 16 auf. Die Lagerung 16 ist vorzugsweise radial außerhalb des Druckmittelsverteilers 3 angeordnet. Die Lagerung des Rotationszylinders 2 erfolgt über ein Lager 19, wodurch der Rotationszylinder 2 im Planetenträger 8 gelagert wird. Der Kurvenring 4 ist direkt mit dem Planetenträger 8 verbunden, wodurch der Antrieb zusätzlich verkürzt wird.

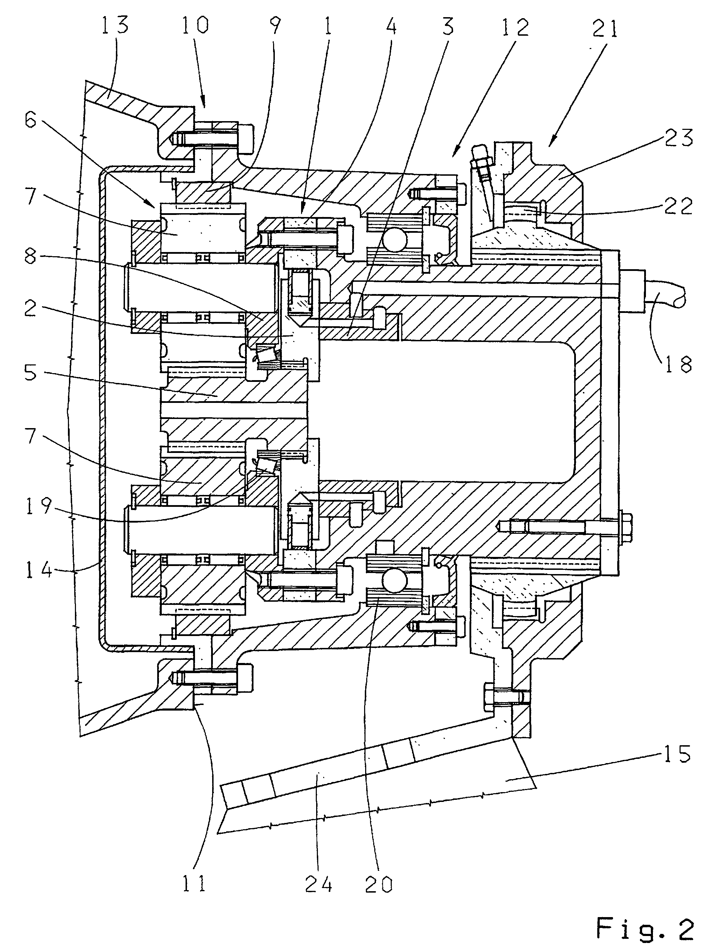

Figur 2: Der Rotationszylinder 2 des hydrostatischen Motors 1 treibt ein inneres Zentralrad 5 einer Planetenstufe 6 an, deren äußeres Zentralrad 9 den Abtrieb bildet und mit einer Mischtrommel 13 verbunden ist. Kräfte der Mischtrommel werden über ein Lager 20 in eine sphärische Lagerung 21 eingeleitet, wobei die Abstützung des Drehmoments über eine Bogenzahnkupplung 22 erfolgt. Bei Fehlwinkeln der Mischtrommel 13 folgt das gesamt Getriebe 12, bis auf das äußere Teil 23, der sphärischen Lagerung 21 und dem Getriebesockel 24, den Bewegungen der Mischtrommel 13. Da die sphärische Lagerung 21 die Fehlwinkel der Mischtrommel 13 ausgleicht, kann das Lager 20 auch als Rollenlager oder Kugellager ausgeführt sein.

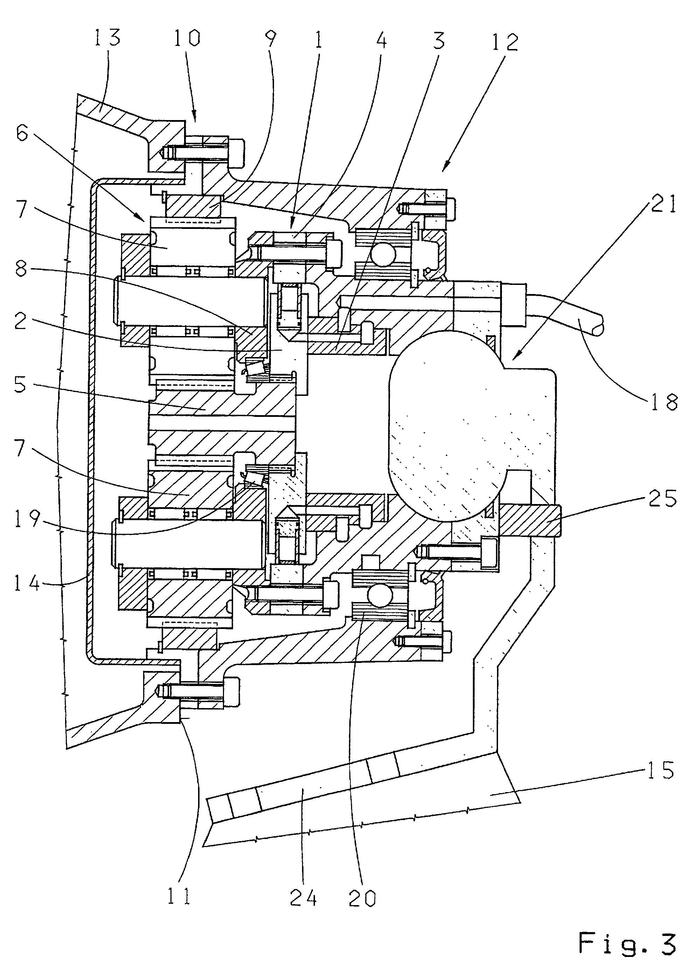

Figur 3: Der Rotationszylinder 2 des hydrostatischen Motors 1 treibt das innere Zentralrad 5 einer Planetenstufe 6 an, deren äußeres Zentralrad 9 den Abtrieb bildet und mit einer Mischtrommel 13 verbunden ist. Fehlwinkel der Mischtrommel 13 werden über eine sphärische Lagerung 21 übertragen, wobei sich das Drehmoment über einen oder mehrere Stifte 25 abstützt. Die Lagerung der Mischtrommel 13 erfolgt über das Lager 20 und die sphärische Lagerung 21. Da das äußere Zentralrad 9 den Abtrieb bildet, kann die radiale Erstreckung des Getriebes 12 geringer ausgeführt werden.

### Bezugszeichen

- 1: hydrostatischer Motor
- 2: Rotationszylinder
- 3: Druckmittelverteiler
- 4: Kurvenring
- 5: inneres Zentralrad
- 6: Planetenstufe
- 7: Planetenräder
- 8: Planetenträger
- 9: äußeres Zentralrad
- 10: Bereich
- 11: Anflanschfläche
- 12: Getriebe
- 13: Mischtrommel
- 14: Wandung
- 15: Sockel
- 16: Lager
- 17: Gleitstein
- 18: hydraulische Anschlüsse
- 19: Lager
- 20: Lager
- 21: sphärische Lagerung
- 22: Bogenzahnkupplung
- 23: äußeres Teil
- 24: Getriebesockel
- 25: Stift

## Patentansprüche

1. Hydrostatisch mechanisches Getriebe zum Antrieb einer Mischtrommel (13), bei welchem ein hydrostatischer Motor (1) mit einem Rotationszylinder (2) über mindestens eine Planetenstufe (6) mit einem inneren Zentralrad (5), mindestens einem Planetenrad (7) und einem äußeren Zentralrad (9) einen Abtrieb antreibt, wobei das innere Zentralrad (5) vom hydrostatischen Motor angetrieben wird und der Abtrieb der Planetenstufe (6) mit der Mischtrommel (13) über eine Anflanschfläche (11) verbindbar ist, und die Planetenstufe (6) im Bereich der Anflanschfläche (11) angeordnet ist, und das äußere Zentralrad (9) der Planetenstufe (6) den Abtrieb antreibt und ein Planetenträger (8) drehfest gehalten ist, **dadurch gekennzeichnet, dass** der hydrostatische Motor (1 ein Radialkolbenmotor mit einem Rotationszylinder (2) und einer Kurvenscheibe (4) ist, bei welchem die Kurvenscheibe (4) mit dem Planetenträger (8) verbunden ist, und bei welchem der Rotationszylinder (2) mit dem inneren Zentralrad (5) verbunden ist.

2. Hydrostatisch mechanisches Getriebe zum Antrieb einer Mischtrommel nach Anspruch 1, **dadurch gekennzeichnet, dass** ein Teil der Planetenstufe (6) innerhalb der Mischtrommel (13) anordbar ist.

3. Hydrostatisch mechanisches Getriebe zum Antrieb einer Mischtrommel nach Anspruch 1, **dadurch gekennzeichnet, dass** der hydrostatische Motor (1) und die Planetenstufe (6) der Mischtrommel geringer beabstandet zur Anflanschfläche anordbar sind als eine Lagerung (16, 20, 21), mit welcher die Mischtrommel (13) über das Getriebe (12) gelagert ist.

4. Hydrostatisch mechanisches Getriebe zum Antrieb einer Mischtrommel nach Anspruch 1, **dadurch gekennzeichnet, dass** eine Wandung (14), welche das Getriebe abtriebsseitig schließt, innerhalb der Mischtrommel (13) anordbar ist.

5. Hydrostatisch mechanisches Getriebe zum Antrieb einer Mischtrommel nach Anspruch 1, **dadurch gekennzeichnet, dass** der hydrostatische Motor (1) und der Planetenträger (8) über ein Lager (20) oder der Verzahnung der Planetenstufe (6) im Abtrieb gelagert sind und den Bewegungen des Abtriebs durch Fehlwinkel der Mischtrommel (13) folgen.

## Claims

1. Hydrostatic-mechanical gearing for driving a mixer drum (13), in the case of which gearing a hydrostatic motor (1) having a rotary cylinder (2) drives an output via at least one planetary stage (6) having an inner centre gear (5), at least one planet gear (7) and an outer centre gear (9), the inner centre gear (5) being driven by the hydrostatic motor and the output of the planetary stage (6) being connectable to the mixer drum (13) via a mounting face (11), and the planetary stage (6) being arranged in the region of the mounting face (11), and the outer centre gear (9) of the planetary stage (6) driving the output and a planet carrier (8) being held in a rotationally fixed manner, **characterised in that** the hydrostatic motor (1) is a radial-piston motor having a rotary cylinder (2) and a cam disc (4), in the case of which the cam disc (4) is connected to the planet carrier (8), and in the case of which the rotary cylinder (2) is connected to the inner centre gear (5).

2. Hydrostatic-mechanical gearing for driving a mixer drum according to Claim 1, **characterised in that** a part of the planetary stage (6) can be arranged inside the mixer drum (13).

3. Hydrostatic-mechanical gearing for driving a mixer drum according to Claim 1, **characterised in that** the hydrostatic motor (1) and the planetary stage (6) of the mixer drum can be arranged at a smaller spacing from the mounting face than a bearing (16, 20, 21) by which the mixer drum (13) is mounted via the gearing (12).

4. Hydrostatic-mechanical gearing for driving a mixer drum according to Claim 1, **characterised in that** a wall (14) which closes the gearing at the output end can be arranged inside the mixer drum (13).

5. Hydrostatic-mechanical gearing for driving a mixer drum according to Claim 1, **characterised in that** the hydrostatic motor (1) and the planet carrier (8) are mounted in the output via a bearing (20) or the toothing of the planetary stage (6), and follow the movements of the output due to an angle error of the mixer drum (13).

## Revendications

1. Transmission hydrostatique mécanique pour l'entraînement d'un tambour mélangeur (13), dans laquelle un moteur hydrostatique (1) comprenant un cylindre de rotation (2) entraîne un organe de sortie par l'intermédiaire d'au moins un étage épicycloïdal (6) qui comprend une roue centrale intérieure (5), au moins un pignon satellite (7) et une roue centrale extérieure (9), la roue centrale intérieure (5) étant entraînée par le moteur hydrostatique et l'organe de sortie de l'étage épicycloïdal (6) pouvant être relié au tambour mélangeur (13) par l'intermédiaire d'une surface d'assemblage à bride (11), l'étage épicycloïdal (6) étant disposé dans la région de la surface d'assemblage à bride (11), la roue centrale extérieure (9) de l'étage épicycloïdal (6) entraînant l'organe de sortie et un porte-satellites (8) étant tenu fixe en rotation, **caractérisée en ce que** le moteur hydrostatique (1) est un moteur à pistons radiaux comprenant un cylindre de rotation (2) et une came (4), la came (4) étant reliée au porte-satellites (8) et le cylindre de rotation (2) étant relié à la roue centrale intérieure (5).

2. Transmission hydrostatique mécanique pour l'entraînement d'un tambour mélangeur selon la revendication 1, **caractérisée en ce qu'**une partie de l'étage épicycloïdal (6) peut être disposée à l'intérieur du tambour mélangeur (13).

3. Transmission hydrostatique mécanique pour l'entraînement d'un tambour mélangeur selon la revendication 1, **caractérisée en ce que** le moteur hydrostatique (1) et l'étage épicycloïdal (6) du tambour mélangeur peuvent être disposés à plus petite distance de la surface d'assemblage à bride qu'un palier (16, 20, 21) avec lequel le tambour mélangeur (13) est monté rotatif par l'intermédiaire de la transmission (12).

4. Transmission hydrostatique mécanique pour l'entraînement d'un tambour mélangeur selon la revendication 1, **caractérisée en ce qu'**une paroi (14) qui ferme la transmission sur le côté de sortie peut être disposée à l'intérieur du tambour mélangeur (13).

5. Transmission hydrostatique mécanique pour l'entraînement d'un tambour mélangeur selon la revendication 1, **caractérisée en ce que** le moteur hydrostatique (1) et le porte-satellites (8) sont montés rotatifs dans l'organe de sortie par l'intermédiaire d'un palier (20) ou de la denture de l'étage épicycloïdal (6), et accompagnent les mouvements de l'organe de sortie résultant de déviations angulaires du tambour mélangeur (13).
